Europäisches Patentamt

European Patent Office

Office européen des brevets

(19)

(11) Numéro de publication: **0 010 995**
**B1**

(12) **FASCICULE DE BREVET EUROPEEN**

(45) Date de publication du fascicule de brevet: **25.11.81**

(51) Int. Cl.³: **B 62 D 47/02,**
**B 62 D 25/20, B 62 D 31/02**

(21) Numéro de dépôt: **79400570.2**

(22) Date de dépôt: **14.08.79**

(54) Aménagement des planchers dans un véhicule de transports en commun.

(30) Priorité: **26.10.78 FR 7830449**

(43) Date de publication de la demande:
**14.05.80 Bulletin 80/10**

(45) Mention de la délivrance du brevet:
**25.11.81 Bulletin 81/47**

(84) Etats Contractants Désignés:
**DE GB IT**

(56) Documents cités:
**BE - A - 694 070**
**DE - A - 2 448 803**
**DE - A - 2 714 072**
**GB - A - 329 680**
**US - A - 1 762 640**
**US - A - 1 991 536**
**US - A - 2 093 859**
**US - A - 3 052 495**

(73) Titulaire: **AUTOMOBILES PEUGEOT**
**75, avenue de la Grande Armée**
**F-75116 Paris (FR)**

(73) Titulaire: **SOCIETE ANONYME AUTOMOBILES**
**CITROEN**
**117 à 167, Quai André Citroen**
**F-75747 Paris Cedex 15 (FR)**

(72) Inventeur: **Cartier, Michel**
**6 Rue Ambroisine**
**F-94500 Champigny/Marne (FR)**

(74) Mandataire: **Moncheny, Michel et al,**
**c/o Cabinet Lavoix 2 Place d'Estienne d'Orves**
**F-75441 Paris Cedex 09 (FR)**

Courier Press, Leamington Spa, England.

## Aménagement des planchers dans un véhicule de transports en commun

La présente invention concerne un aménagement des planchers dans un véhicule de transport en commun et, plus particulièrement des dispositions permettant de ranger les bagages accompagnant les voyageurs transportés.

Il est connu de prévoir dans des véhicules de transport en commun un plancher au niveau duquel s'effectue la circulation des voyageurs, et un faux plancher surélevé sur lequel reposent les pieds de ces voyageurs en position assise (Brevet GB.329 680).

Il est également courant de prévoir dans les véhicules de transport en commun des porte-bagages placés le long de chaque côté de la carrosserie au-dessus des sièges et des ouvertures latérales. Une telle disposition n'est pas sans inconvénient. C'est ainsi que les voyageurs occupant les sièges situés sous les porte-bagages risquent de se cogner la tête lorsqu'ils accèdent à leur place ou lorsqu'ils la quittent. D'autre part, les colis simplement posés sur ces porte-bagages risquent de tomber sur la tête des voyageurs en cas de manoeuvres un peu brusques.

Cette invention a pour but de fournir un moyen de rangement qui ne présente pas les inconvénients ci-dessus.

Elle s'applique à un véhicule de transport en commun comportant un plancher au niveau duquel s'effectue la circulation des voyageurs et un faux plancher surélevé sur lequel reposent les pieds des voyageurs en position assise.

Elle est caractérisée en ce que le faux plancher est interrompu au droit de chaque siège et un espace de rangement est délimité sous chaque siège, entre le dessous de l'assise, le plancher et les pieds avant et arrière dudit siège.

Un exemple de réalisation fait l'objet de la description qui suit, en référence aux dessins joints dans lesquels:

—la Fig. 1 est une vue en plan d'un véhicule de transport en commun auquel l'invention est appliquée;

— la Fig. 2 est une vue en élévation selon la ligne 2—2 de la Fig. 1;

—la Fig. 3 est une vue analogue à celle de la Fig. 2 d'une variante.

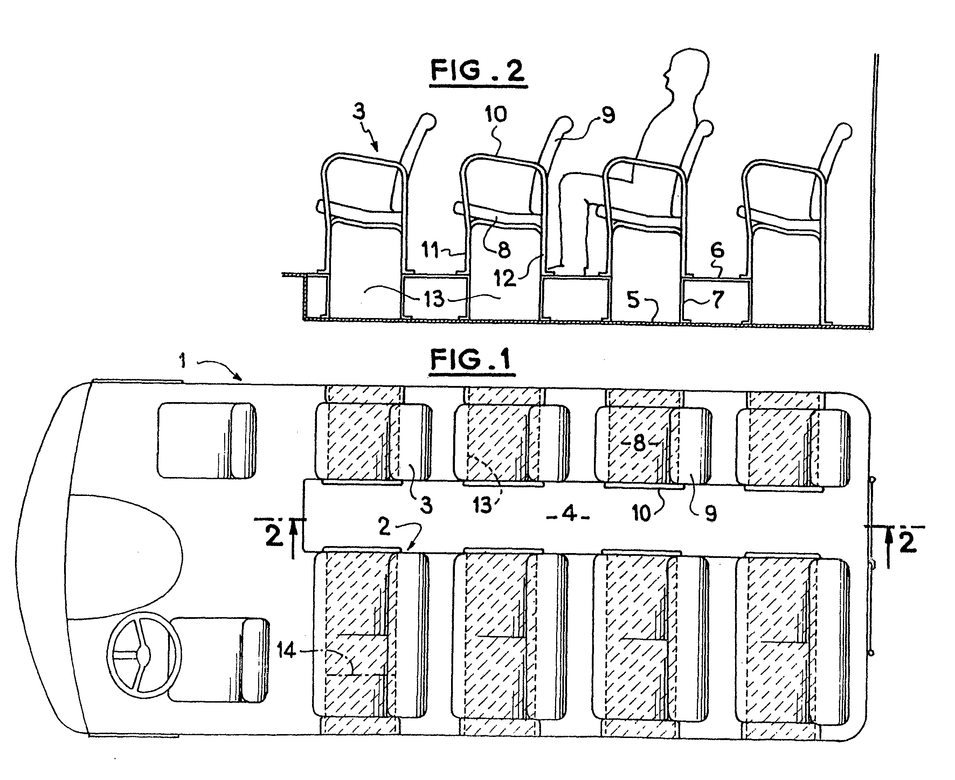

On a représenté sur la Fig. 1, un véhicule 1 équipé avec des sièges doubles 2, d'un côté, et des sièges simples 3, de l'autre côté. Ces sièges sont séparés par une allée d'accès 4 dont la surface de circulation constitue le plancher 5 du véhicule.

Un faux plancher 6, surélevé, s'étend de chaque côté de l'allée d'accès 4. Ce faux plancher 6 forme de caissons 7 entre deux sièges mais il est interrompu sous les sièges où le sol est ramené au niveau du plancher 5.

Chaque siège comporte une assise 8 et un dossier 9 portés par une armature tubulaire 10 comportant des pieds avant 11 et arrière 12 fixés sur deux caissons 7 successifs.

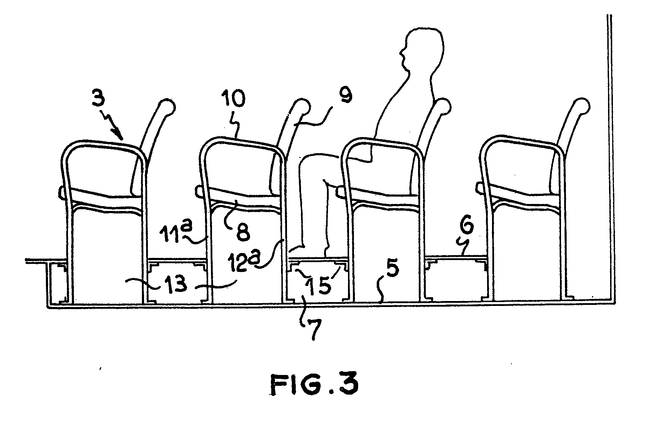

Dans la variante de la Fig. 3, les mêmes références numériques que sur les Fig. 1 et 2, sont utilisées pour désigner les mêmes éléments. La seule différence réside dans le fait que les pieds 11ª et 12ª des sièges sont fixés directement sur le plancher principal 5, le faux plancher 6 reposant sur des tasseaux ou des cornières 15 fixés sur les pieds 11ª, 12ª.

Dans les deux modes de réalisation décrits, un espace important 13 souligné par des hachures sur la Fig. 1, reste libre entre l'assise 8, le plancher 5 et les pieds avant 11, 11ª et arrière 12,12ª, pour le logement des bagages accompagnant les voyageurs tranportés. Cet espace a en particulier une hauteur suffisemment importante pour pouvoir recevoir des bagages relativement encombrants. Les caissons 7 restent par ailleurs utilisables pour diverses servitudes, par exemple, pour le logement des moyens de chauffage.

Si la profondeur de l'espace de rangement 13, suivant une direction horizontale, est trop importante, elle peut être réduite par une cloison telle que représentée en trait mixte en 14 sur la Fig. 1. Une telle cloison évite que les bagages ne glissent contre la paroi latérale du véhicule, hors d'atteinte du passager. Des moyens convenables peuvent par ailleurs être prévus sur le plancher 5 pour empêcher le glissement latéral des bagages.

On a indiqué dans la définition de l'invention que de tels compartiments 13 étaient prévus sous chaque siège. Bien que ceci soit évidemment souhaitable il va de soi que certains sièges, peuvent ne pas être pourvus d'un compartiment, pour des raisons d'implantation, de passage de roues ou autres.

**Revendications**

1. Véhicule de transport en commun comportant un plancher (4) au niveau duquel s'effectue la circulation des voyageurs et un faux plancher surélevé (6) sur lequel reposent les pieds des voyageurs en position assise, caractérisé en ce que ce faux plancher (6) est interrompu au droit de chaque siège (2,3), et un espace de rangement (13) est délimité sous chaque siège, entre le dessous de l'assise, le plancher (5) et les pieds avant et arrière dudit siège.

2. Véhicule suivant la revendication 1, caractérisé en ce qu'une cloison (14) limite la profondeur horizontale de l'espace de rangement (13) situé sous chaque siège.

3. Véhicule suivant la revendication 1, caractérisé en ce que les sièges sont fixés sur le faux-plancher (6).

4. Véhicule suivant la revendication 1, caractérisé en ce que les sièges sont fixés sur le plancher proprement dit (5).

**Claims**

1. Public transport vehicle comprising a floor (4) on the level of which the passengers circulate in the vehicle and a raised false floor (6) on which latter the feet of the seated passengers rest, characterised in that this false floor (6) is interrupted in the region of each seat (2,3) and a storage space (13) is defined under each seat between the bottom of the seat cushion, the floor (5) and the front and rear legs of said seat.

2. Vehicle according to claim 1, characterised in that a partition wall (14) limits the horizontal extent of the storage space (13) located under each seat.

3. Vehicle according to claim 1, characterised in that the seats are fixed to the false floor (6).

4. Vehicle according to claim 1, characterised in that the seats are fixed to the floor proper (5).

**Patentansprüche**

1. Öffentliches Verkehrsmittel mit einem Boden (4) auf dem die Reisenden gehen, und mit einem erhöhten Zwischenboden (6), auf dem die Füsse der sitzenden Reisenden ruhen, dadurch gekennzeichnet, dass der Zwischenboden an der Stelle jedes Sitzes (2,3) unterbrochen ist und zwischen der Unterseite des Sitzes, dem Boden und vorderen sowie hinteren Beinen des Sitzes ein Stauraum (13) begrenzt ist.

2. Verkehrsmittel nach Anspruch 1, dadurch gekennzeichnet, dass eine Zwischenwand (14) die waagerechte Tiefe des unter jedem Sitz befindlichen Stauraums (13) begrenzt.

3. Verkehrsmittel nach Anspruch 1, dadurch gekennzeichnet, dass die Sitze auf dem Zwischenboden (6) befestigt sind.

4. Verkehrsmittel nach Anspruch 1, dadurch gekennzeichnet, dass die Sitze auf dem eigentlichen Boden (5) befestigt sind.

# FIG . 2

# FIG . 1

0 010 995

FIG.3